# EUROPEAN PATENT APPLICATION

(11) **EP 3 399 660 A1**
(43) Date of publication of application: **07.11.2018**
(21) Application number: 17733932.2
(22) Date of filing: 24.01.2017
(51) Int. Cl.: H04B 7/04

(54) **BROADCAST INFORMATION TRANSMISSION METHOD AND DEVICE**

(30) Priority: 28.12.2015 CN 201511001290
(71) Applicant: China Academy of Telecommunications Technology, Hai Dian District Beijing 100191 (CN)
(72) Inventor: SU, Xin, Beijing 100191 (CN); LI, Chuanjun, Beijing 100191 (CN); SONG, Yang, Beijing 100191 (CN)
(74) Representative: Nony
(86) International application number: PCT/CN2017/072514
(87) International publication number: WO 2017/114516

(57) **Abstract**

Disclosed are a broadcast information transmission method and device. A base station uses preset beamforming weight vectors to perform beamforming on a physical broadcast channel. A plurality of preset beamforming weight vectors are used and sequentially selected by the base station to perform beamforming on the physical broadcast channel. Since a plurality of preset beamforming weight vectors are used, a coverage effect on a sector is therefore improved in comparison with a single beam. In addition, the preset beamforming weight vectors are sequentially selected by the base station to perform beamforming on the physical broadcast channel, and broadcast information transmitted by the physical broadcast channel therefore achieves effective coverage.

## Description

### Cross Reference

This application claims the benefit and priority of Chinese Patent Application No. 201511001290.2, filed with the Chinese Patent Office on December 28, 2015, and entitled "method and apparatus for transmitting broadcast information". The entire disclosure of the above application is incorporated herein by reference.

### Field

The present disclosure relates to the field of communications, and particularly to a method and apparatus for transmitting broadcast information.

### Background

Since the multiple-input and multiple-output (MIMO) technology is important to improve the peak rate and system spectral efficiency, radio access technology standards such as long-term evolution (LTE) and LTE-advanced (LTE-A) are built upon MIMO plus the orthogonal frequency-division multiplexing (OFDM) technology. The performance gain of the MIMO technology comes from the spatial degrees of freedom available in a multi-antenna system, so one of the most important evolvements in standardization of the MIMO technology is the extension of dimensions. In the LTE Release 8 (Rel-8 or R8), MIMO transmission of at most four layers is supported. In the LTE Rel-9, at most four downlink transmission data layers is supported in multi-user MIMO (MU-MIMO) of the transmission mode (TM)-8. And an 8-port channel state information-reference signal (CSI-RS), a user equipment (UE)-specific reference signal (URS) and a multi-granularity codebook were introduced into the LTE Rel-10 to improve the space resolution of the channel state information, and to extend the transmission capacity of single-user MIMO (SU-MIMO) to at most 8 transmission data layers.

In a base station antenna system having a structure of a passive antenna system (PAS), a plurality of antenna ports (where each port corresponds to a separate radio frequency-intermediate frequency-baseband channel) are arranged horizontally, and a plurality of array elements in a vertical dimension corresponding to each port are connected through a radio frequency cable. In this case, the MIMO technology can optimize spatial-domain characteristics of signals of respective terminals in the horizontal dimension only by adjusting relative amplitudes and/or phases between the different ports in the horizontal dimension, and only uniform sector-level beam-forming can be made in the vertical dimension. After the Active Antenna System (AAS) technology has been introduced into mobile communication systems, a base station antenna system can obtain more degrees of freedom in the vertical dimension, and thus can optimize signals at a UE level in the three dimensional space.

The MIMO technology is becoming three-dimensional and large-scale. The massive MIMO technology based upon a larger-scale array of antennas (including hundreds of or even more array elements) can greatly improve the utilization ratio of system bands, and support more accessing UEs. Therefore, the massive MIMO technology is expected to be one of the most promising physical layer technologies in the next-generation mobile communication system.

In a massive MIMO system, with an increasing number of antennas, the quality of data transmission over a service channel, and the ability of suppressing interference of the service channel significantly benefit from the high space resolution of pre-coding/beam-forming arising from the extended array scale. A larger number of antenna elements facilitate formation of a narrow beam, but the utilization efficiency of power may be degraded due to the narrow beam, thus affecting the coverage performance. In this case, the extended array scale may hinder an ideal sector in a traditional sense from being formed, thus possibly discouraging transmission of common information such as broadcast information and control information.

There has been absent so far a solution to this problem.

### Summary

Embodiments of the disclosure provide a method and apparatus for transmitting broadcast information so as to enable effective coverage with broadcast information.

An embodiment of the disclosure provides a method for transmitting broadcast information. The method includes: determining, by a base station, a beam-forming weight vector for beam-forming on a physical broadcast channel according to a plurality of preset beam-forming weight vectors, where broadcast information is transmitted over the physical broadcast channel, and the preset beam-forming weight vectors are selected sequentially by the base station to perform beam-forming on the physical broadcast channel; and performing, by the base station, beam-forming on the physical broadcast channel using the determined beam-forming weight vector.

In an implementation, the entire sector is fully covered with beams corresponding to the plurality of preset beam-forming weight vectors.

In an implementation, determining, by the base station, the beam-forming weight vector for beam-forming on the physical broadcast channel includes: selecting, by the base station, one of the plurality of preset beam-forming weight vectors according to a preset order at a preset cycle. The selected beam-forming weight vector is used for performing beam-forming on the physical broadcast channel in the corresponding cycle.

In an implementation, the length of the cycle is an integer multiple of a transmission cycle of the broadcast information.

In an implementation, the plurality of preset beam-forming weight vectors are divided into M sets, each set includes N beam-forming weight vectors, the entire sector is fully covered with beams corresponding to the M*N beam-forming weight vectors, and both M and N are integers more than 1. Determining, by the base station, the beam-forming weight vector for beam-forming on the physical broadcast channel includes: selecting, by the base station, one of the M sets according to a preset first order at a preset first cycle; and selecting, by the base station, one of the beam-forming weight vectors in the selected set according to a preset second order at a preset second cycle, where the selected beam-forming weight vector is used to perform beam-forming on the physical broadcast channel in the corresponding cycle, and the length of the first cycle is no less than N times the length of the second cycle.

In an implementation, the length of the second cycle is T, the length of the first cycle is M*T, and T is an integer multiple of the length of the transmission cycle of broadcast information.

In an implementation, the method further includes: performing, by the base station, beam-forming on a demodulation reference signal of broadcast information transmitted over a same scheduling resource as the physical broadcast channel using the determined beam-forming weight vector.

Another embodiment of the disclosure provides a method for transmitting broadcast information. The method includes: receiving, by a terminal, a signal transmitted over a physical broadcast channel, where beam-forming is performed on the physical broadcast channel using a beam-forming weight vector selected from a plurality of preset beam-forming weight vectors, and the plurality of beam-forming weight vectors are selected sequentially by a base station to perform beam-forming on the physical broadcast channel; and decoding and demodulating, by the terminal, received broadcast information transmitted over the physical broadcast channel.

In an implementation, the entire sector is fully covered with beams corresponding to the plurality of preset beam-forming weight vectors.

In an implementation, decoding and demodulating, by the terminal, the received broadcast information transmitted over the physical broadcast channel includes: demodulating and decoding, by the terminal, the broadcast information transmitted over the physical broadcast channel and received over one of beams separately; or merging by the terminal, broadcast information transmitted over the physical broadcast channel and received over K beams and performing demodulation and decoding on the merged broadcast information. K is an integer more than 1.

In an implementation the method further includes: receiving a demodulation reference signal of broadcast information. The demodulation reference signal of broadcast information is transmitted over a same scheduling resource as the physical broadcast channel after performing beam-forming thereon using the same beam-forming weight vector for the physical broadcast channel. Decoding and demodulating, by the terminal, the received broadcast information transmitted over the physical broadcast channel includes: decoding and demodulating, by the terminal, the received broadcast information transmitted over the physical broadcast channel according to the received demodulation reference signal of broadcast information.

An embodiment of the disclosure provides a base station. The base station includes: a determining module configured to determine a beam-forming weight vector for beam-forming on a physical broadcast channel according to a plurality of preset beam-forming weight vectors, where broadcast information is transmitted over the physical broadcast channel, and the preset beam-forming weight vectors are selected sequentially by the base station to perform beam-forming on the physical broadcast channel; and a transmitting module configured to perform beam-forming on the physical broadcast channel using the determined beam-forming weight vector.

In an implementation, the entire sector is fully covered with beams corresponding to the plurality of preset beam-forming weight vectors.

In an implementation, the determining module is further configured to: select one of the plurality of preset beam-forming weight vectors according to a preset order at a preset cycle. The selected beam-forming weight vector is used for performing beam-forming on the physical broadcast channel in the corresponding cycle.

In an implementation, the length of the cycle is an integer multiple of a transmission cycle of the broadcast information.

In an implementation, the plurality of preset beam-forming weight vectors are divided into M sets, each set includes N beam-forming weight vectors, the entire sector is fully covered with beams corresponding to the M*N beam-forming weight vectors, and both M and N are integers more than 1. The determining module is further configured to: select one of the M sets according to a preset first order at a preset first cycle; and select one of the beam-forming weight vectors in the selected set according to a preset second order at a preset second cycle. The selected beam-forming weight vector is used to perform beam-forming on the physical broadcast channel in the corresponding cycle, and the length of the first cycle is no less than N times the length of the second cycle.

In an implementation, the length of the second cycle is T, the length of the first cycle is M*T, and T is an integer multiple of the length of the transmission cycle of broadcast information.

In an implementation, the transmitting module is further configured to: perform beam-forming on a demodulation reference signal of broadcast information transmitted over a same scheduling resource as the physical broadcast channel using the determined beam-forming weight vector.

An embodiment of the disclosure provides a terminal. The terminal includes: a receiving module configured to receive a signal transmitted over a physical broadcast channel, where beam-forming is performed on the physical broadcast channel using a beam-forming weight vector selected from a plurality of preset beam-forming weight vectors, and the plurality of beam-forming weight vectors are selected sequentially by a base station to perform beam-forming on the physical broadcast channel; and a processing module configured to decode and demodulate received broadcast information transmitted over the physical broadcast channel.

In an implementation, the entire sector is fully covered with beams corresponding to the plurality of preset beam-forming weight vectors.

In an implementation, the processing module is further configured to: demodulate and decode the broadcast information transmitted over the physical broadcast channel and received over one of beams separately; or merge broadcast information transmitted over the physical broadcast channel and received over K beams and perform demodulation and decoding on the merged broadcast information. K is an integer more than 1.

In an implementation, the receiving module is further configured to receive a demodulation reference signal of broadcast information, where the demodulation reference signal of broadcast information is transmitted over a same scheduling resource as the physical broadcast channel after performing beam-forming thereon using the same beam-forming weight vector for the physical broadcast channel. The processing module is configured to decode and demodulate received broadcast information transmitted over the physical broadcast channel according to the received demodulation reference signal of broadcast information.

Another embodiment of the disclosure provides a base station. The base station includes a communication module; a memory configured to store computer program instructions; and a processor coupled to the memory, and configured to read the computer program instructions stored in the memory to perform: determining, by a base station, a beam-forming weight vector for beam-forming on a physical broadcast channel according to a plurality of preset beam-forming weight vectors, where broadcast information is transmitted over the physical broadcast channel, and the preset beam-forming weight vectors are selected sequentially by the base station to perform beam-forming on the physical broadcast channel; and performing, by the base station, beam-forming on the physical broadcast channel using the determined beam-forming weight vector.

Another embodiment of the disclosure provides a terminal. The terminal includes: a communication module; a memory configured to store computer program instructions; and a processor coupled to the memory, and configured to read the computer program instructions stored in the memory to perform: receiving, by a terminal, a signal transmitted over a physical broadcast channel, where beam-forming is performed on the physical broadcast channel using a beam-forming weight vector selected from a plurality of preset beam-forming weight vectors, and the plurality of beam-forming weight vectors are selected sequentially by a base station to perform beam-forming on the physical broadcast channel; and decoding and demodulating, by the terminal, received broadcast information transmitted over the physical broadcast channel.

In the embodiments above of the disclosure, the base station performs beam-forming on the PBCH using multiple preset beam-forming weight vectors, and the preset beam-forming weight vectors are selected sequentially by the base station to perform beam-forming on the PBCH; and since the number of preset beam-forming weight vectors is more than one, the effect of covering the sector can be improved over a single beam, and also since these preset beam-forming weight vectors are selected sequentially by the base station to perform beam-forming on the PBCH, the sector can be covered in effect with the broadcast information transmitted over the PBCH.

### Brief Description of the Drawings

Fig. 1 is a schematic diagram of conventional mapping of PBCH resources.
Fig. 2 is a schematic flow chart of broadcast information transmission at the base station's side according to an embodiment of the disclosure.
Fig. 3 is a schematic diagram of mapping broadcast information according to an embodiment of the disclosure.
Fig. 4 and Fig. 5 are schematic diagrams of beams according to an embodiment of the disclosure.
Fig. 6 is a schematic flow chart of broadcast information transmission at the terminal's side according to an embodiment of the disclosure.
Fig. 7 is a schematic structural diagram of a base station according to an embodiment of the disclosure.
Fig. 8 is a schematic structural diagram of a terminal according to an embodiment of the disclosure.
Fig. 9 is a schematic structural diagram of a base station according to another embodiment of the disclosure.
Fig. 10 is a schematic structural diagram of a terminal according to another embodiment of the disclosure.

### Detailed Description of the Embodiments

In order to make the objects, technical solutions, and advantages of the embodiments of the disclosure more apparent, the technical solutions according to the embodiments of the disclosure are described below in further details with reference to the drawings. Apparently the embodiments to be described are only a part but not all of the embodiments of the disclosure. Based upon the embodiments described herein, all the other embodiments which can occur to those ordinarily skilled in the art without any inventive effort shall fall into the scope of the disclosure.

It shall be appreciated that the technical solutions according to embodiments of the disclosure can be apply to various communication systems, e.g., a global system for mobile communications (GSM) system, a code division multiple access (CDMA) system, a wideband code division multiple access (WCDMA) system, a general packet radio service (GPRS) system, a long-term evolution (LTE) system, an advanced long-term evolution (LTE-A) system, a universal mobile telecommunication system (UMTS), etc.

It shall be further appreciated that, in the embodiments of the disclosure, user equipment (UE) includes but is not limited to a mobile station (MS), a mobile terminal, a mobile telephone, a handset, or portable equipment. The user equipment can communicate with one or more core networks via a radio access network (RAN). For example, the user equipment can be a mobile phone (or a "cell" phone) or a computer capable of radio communication, or, the user equipment can be a portable, pocket, handheld, built-in-computer, or on-vehicle mobile device.

In the embodiments of the disclosure, a base station (e.g., an access node) can be such a device in an access network that communicates with a radio terminal over one or more sectors via an air interface. The base station can convert a received radio frame into an IP packet, and a received IP packet into a radio frame, and can operate as a router between the radio terminal and the remaining components of the access network, where the remaining components of the access network can include an internet protocol (IP) network. The base station can further coordinate attribute management on the air interface. For example, the base station can be a base transceiver station (BTS) in a GSM or CDMA system, or can be a Node B in a WCDMA system, or can be an evolved Node B (eNB or e-Node B) in an LTE system, although the embodiments of the disclosure are limited thereto.

In the embodiments of the disclosure, the base station performs beam-forming on a physical broadcast channel using preset beam-forming weight vectors. The preset beam-forming weight vectors are selected sequentially by the base station to perform beam-forming on the physical broadcast channel, thereby enabling effective coverage of broadcast information.

Beam-forming is a technology for signal preprocessing based upon antenna array. Weighting coefficients (weights) of each array element in an array of antennas are adjusted in beam-forming to produce a directional beam so as to obtain a significant array gain.

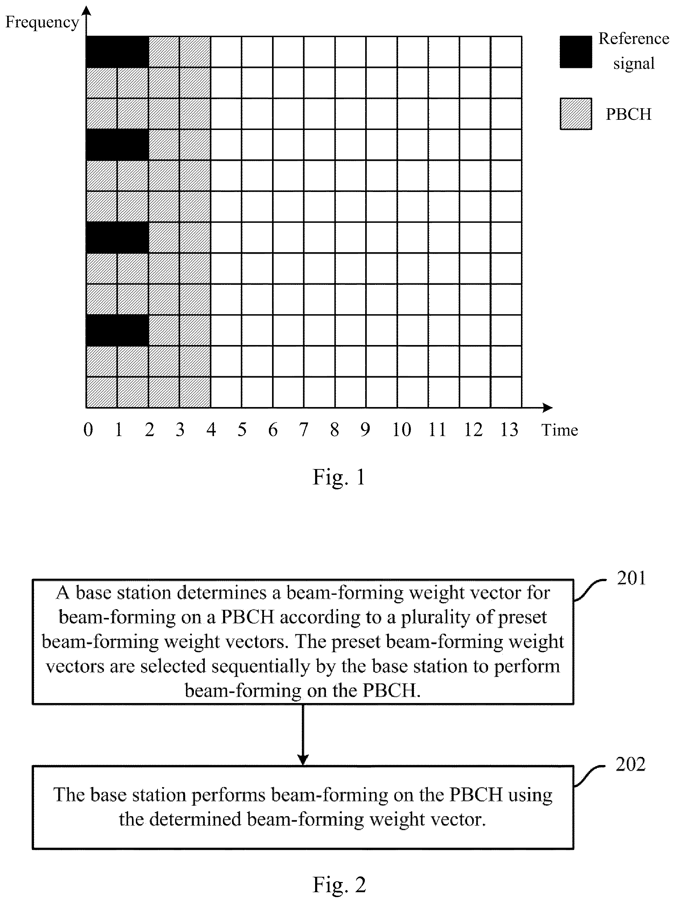

A physical broadcast channel (PBCH) is configured for transmitting broadcast information. In an LTE system, the PBCH occupies first four OFDM symbols (the symbol 0 to the symbol 3) in the second slot (slot 1) of the sub-frame 0, and occupies six physical resource blocks (PRBs) in the frequency domain, where eight resource elements (REs) of each PRB are occupied by a CRS, and the CRS is configured for demodulating broadcast information from the PBCH. The cycle for transmitting the PBCH is 40ms, and the PBCH is transmitted once every 10ms, so that the terminal can receive and demodulate the broadcast information from the PBCH at any one of four times. Fig. 1 illustrates a schematic diagram of mapping of PBCH resources in a PRB in the LTE system, where the PRB includes 14 OFDM symbols in the time domain, and 12 sub-carriers in the frequency domain.

In the embodiments of the disclosure, the base station can be an eNB, a macro base station, a micro base station, a pico base station, an access point (AP), a transmission point (TP) in an LTE system, or a base station in a next-generation wireless communication system, and etc., and the base station can also include cells or sectors, although the embodiments of the disclosure are not be limited thereto.

In the embodiments of the disclosure, the terminal can be a device capable of wireless communication, such as a handheld device, an on-vehicle device, a wearable device, a computing device, or another processing device connected with a wireless modem, or can be UE, an MS, or terminal equipment, and can have various forms, although the embodiments of the disclosure are not limited thereto.

In the embodiments of the disclosure, LTE can be regarded as corresponding to the 3^{rd} Generation Partnership Project (3GPP) Rel-8, Rel-9, Rel-10 and the releases subsequent thereto. A structure of an LTE network can be a macro cell, a micro cell, a pico cell, a femto cell, a network including relays and forwarding nodes, or a hybrid network structure (including one or more of a macro cell, a micro cell, a pico cell, a femto cell, relays and forwarding nodes), and etc., although the embodiments of the disclosure are not limited thereto.

The embodiments of the disclosure are described below in details with reference to the drawings.

Fig. 2 illustrates a schematic flow chart of broadcast information transmission at the base station's side according to an embodiment of the disclosure. The flow as illustrated can include the following operations.

Operation 201: A base station determines a beam-forming weight vector for beam-forming on a PBCH according to a plurality of preset beam-forming weight vectors. The preset beam-forming weight vectors are selected sequentially by the base station to perform beam-forming on the PBCH. That is, in each transmission cycle of broadcast information, the base station selects one of the preset beam-forming weight vectors according to a preset order to perform beam-forming on a PBCH to be transmitted in this transmission cycle, so that the preset beam-forming weight vectors are selected by the base station in turn to perform beam-forming on PBCHs to be transmitted in corresponding transmission cycles.

A PBCH is configured for transmitting broadcast information, i.e., system broadcast information. The system broadcast information can include but is not limited to a downlink system bandwidth, a single frequency network (SFN) sub-frame number, physical hybrid automatic repeated request (ARQ) indicator channel (PHICH) indication information, antenna configuration information, and etc., where the antenna information is mapped into a mask of a cyclic redundancy check (CRC).

Broadcast information in an LTE system is carried over a broadcast control channel (BCCH). The BCCH is a logic channel. System broadcast information carried over the BCCH is divided into a master information block (MIB) and a system information block (SIB). The MIB is basic configuration information of the system, and is transmitted over a fixed physical resource of the PBCH, and the SIB is scheduled to be transmitted over a downlink shared channel (DL-SCH).

In a particular implementation of the embodiment of the disclosure, a plurality of beam-forming weight vectors can be preset. A beam-forming weight vector can include NT (NT is the number of array elements) weights (weighting coefficients). A directional beam can be produced through beam-forming using a beam-forming weight vector. According to the plurality of preset beam-forming weight vectors above, the base station can select one of the plurality of beam-forming weight vectors sequentially under a preset rule to perform beam-forming on the PBCH. In this way, broadcast information coverage can be improved in a sector.

One embodiment of the disclosure provides two implementation schemes (a first scheme and a scheme), and these two preferable schemes are described below in details respectively.

### First Implementation Scheme

N (N is an integer more than 1) beam-forming weight vectors are preset. The entire sector can be fully covered by beams corresponding to the N beam-forming weight vectors (i.e., a combination of N beams) as required.

The base station selects one of the N beam-forming weight vectors according to a preset order in each preset cycle T. The selected beam-forming weight vector is used to perform beam-forming on a PBCH to be transmitted in the corresponding cycle T. In this way, the base station can transmit broadcast information over the N beams alternately in the preset order over the cycles Ts.

In a case where the cycle for transmitting the PBCH is 40ms, and the PBCH is transmitted once every 10ms (that is, broadcast information is transmitted at a cycle of 10ms), the length of the cycle T can be set to 10ms, or can be set to an inter multiple of 10ms, e.g., 40ms.

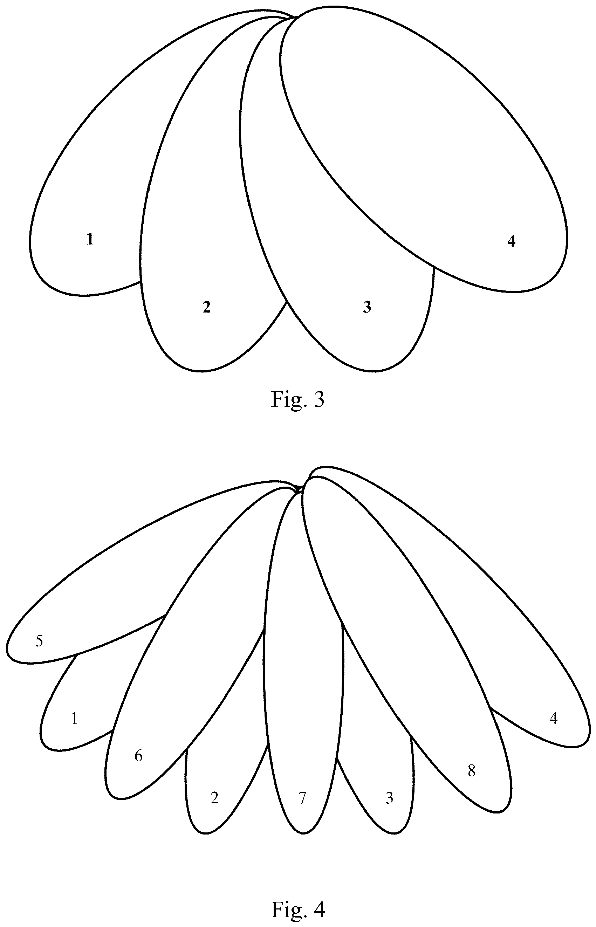

In an example, N=4, i.e., 4 beam-forming weight vectors can be preset, and the entire sector is fully covered with their corresponding beams, as illustrated by Fig. 3. The base station performs beam-forming on the PBCH using these two beam-forming weight vectors alternately according to a preset order in cycles, where each cycle T=10ms, and thus transmits broadcast information over the four corresponding beams alternately. In this way, the base station can select one of the beam-forming weight vectors in each transmission cycle of broadcast information to perform beam-forming, and transmit broadcast information over each beam in a corresponding transmission cycle. The broadcast information can be transmitted in the entire coverage area of the sector in every four transmission cycles of broadcast information.

### Second Scheme

M (M is an integer more than 1) sets are preset, where each set includes N (N is an integer more than 1) beam-forming weight vectors. The entire sector can be fully covered by beams corresponding to the M*N beam-forming weight vectors (i.e., a combination of M*N beams) as required.

The base station can select one of the M sets according to a preset first order in a preset first cycle T1, and select one of the beam-forming weight vectors in the selected set according to a preset second order in a preset second cycle T2. The selected beam-forming weight vector is used to perform beam-forming on a PBCH in the corresponding cycle. The length of the second cycle is T, the length of the first cycle is M*T, and T is an integer multiple of the length of a transmission cycle of broadcast information.

In a case when the cycle for transmitting the PBCH is 40ms, and the PBCH is transmitted once every 10ms (that is, broadcast information is transmitted at a cycle of 10ms), the length of the first cycle T1 can be set to 40ms, and the length of the second cycle T2 can be set to 10ms.

In an example, M=2 sets of beam-forming weight vectors can be set, where each set includes N=4 beam-forming weight vectors, and the entire sector is fully covered with their corresponding M*N=8 beams as illustrated by Fig. 4. The base station performs beam-forming on the PBCH using four beam-forming weight vectors of a first set alternately according to a preset order at a cycle T2=10ms. After all the four beam-forming weight vectors in the first set of beam-forming weight vectors are selected, that is, after T1=40ms, the base station performs beam-forming on the PBCH using the four beam-forming weight vectors in a second set alternately in the preset order. After another 40ms, the base station performs beam-forming on the PBCH using the four beam-forming weight vectors in the first set of beam-forming weight vectors alternately in the preset order. And so on. In this way, the base station can select one of the beam-forming weight vectors in each cycle according to the transmission cycle of broadcast information to perform beam-forming, and transmit broadcast information in the transmission cycle over the corresponding beam, so that the broadcast information can be transmitted in the entire coverage area of the sector in every eight transmission cycles of broadcast information.

Operation 202: The base station performs beam-forming on the PBCH using the determined beam-forming weight vector.

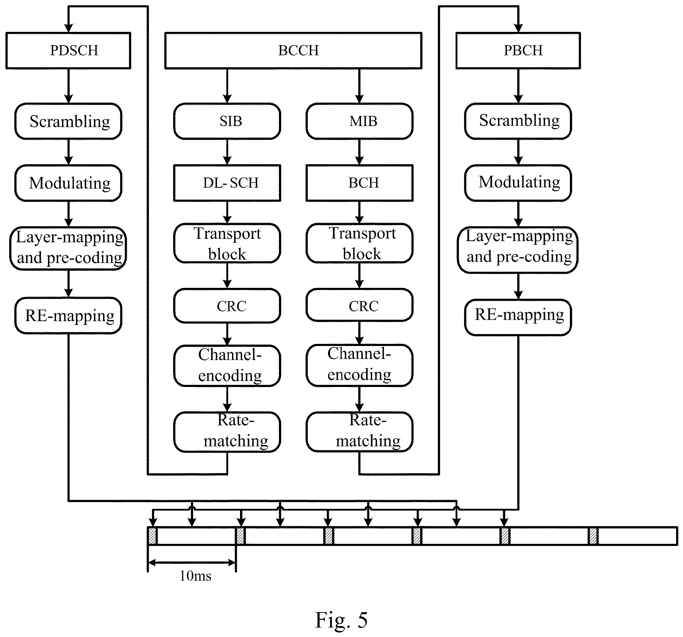

Fig. 5 illustrates a process of mapping system broadcast information to resources in an LTE system in the case that a PBCH cycle is 40ms, and a PBCH is transmitted once every 10ms (that is, a transmission cycle of broadcast information is 10ms).

As illustrated by Fig. 5, an MIB in a BCCH is mapped to a broadcast channel (BCH), the information carried over the BCH is processed by signal processing processes such as channel encoding and rate matching, and then is mapped to the PBCH. The information carried over the PBCH is processed by scrambling, modulating, layer mapping and pre-coding, and then mapped onto and transmitted in REs of the first four OFDM symbols in the second slot of the sub-frame 0. An SIB in the BCCH is mapped to a DL-SCH, the information carried over the DL-SCH is processed by signal processing processes such as channel encoding and rate matching, and then mapped to a physical downlink shared channel (PDSCH). The information carried over the PDSCH is processed by signal processing processes such as channel encoding and rate matching, and then mapped onto and transmitted in REs.

Furthermore, in a case when demodulation reference signals of broadcast information are also transmitted in OFDM symbols occupied by the PBCH, in the embodiment of the disclosure, the base station can perform beam-forming on a demodulation reference signal of broadcast information transmitted over a same scheduling resource as the PBCH using the same beam-forming weight vector as the PBCH. Taking the PBCH and the reference signal as illustrated by Fig. 1 as an example, in the first four OFDM symbols of six PRBs of the sub-frame 0, the same beam-forming weight vector is used for the PBCH and a reference signal, where the demodulation reference signal of broadcast information can be a CRS, or a newly devised reference signal, although the embodiment of the disclosure is not limited thereto.

In an implementation, the base station can determine a resource, e.g., a time resource, a frequency resource, a sequence, or a combination thereof, for a demodulation reference signal of broadcast information according to a preset correspondence relationship between a cell ID and a demodulation reference signal of broadcast information, then perform beam-forming on the demodulation reference signal of broadcast information using a corresponding beam-forming weight vector, and transmit the demodulation reference signal of broadcast information over the corresponding resource.

In a massive MIMO system, with an increasing number of antennas, the quality of data transmission over a service channel, and the ability of suppressing interference of the service channel significantly benefit from the high space resolution of pre-coding/beam-forming arising from the extended array scale. However conventionally, transmission of broadcast information is based upon a CRS, and the entire sector shall be covered with the CRS which is a common reference signal for all the UE in the sector, so beam-forming can not be performed specifically for optimization of certain UE or a certain area. Actually a larger number of antenna elements facilitate formation of a narrow beam, but the utilization efficiency of power may be degraded due to the narrow beam, thus affecting the coverage performance. In this case, the extended array scale may hinder an ideal sector in a traditional sense from being formed, thus possibly discouraging transmission of public information such as broadcast information and control information. In the embodiment of the disclosure, the base station performs beam-forming on the PBCH using multiple preset beam-forming weight vectors, and the preset beam-forming weight vectors are selected sequentially by the base station to perform beam-forming on the PBCH; and since the number of preset beam-forming weight vectors is more than one, the effect of covering the sector can be improved over a single beam, and also since these preset beam-forming weight vectors are selected sequentially by the base station to perform beam-forming on the PBCH, the sector can be covered in effect with the broadcast information transmitted over the PBCH.

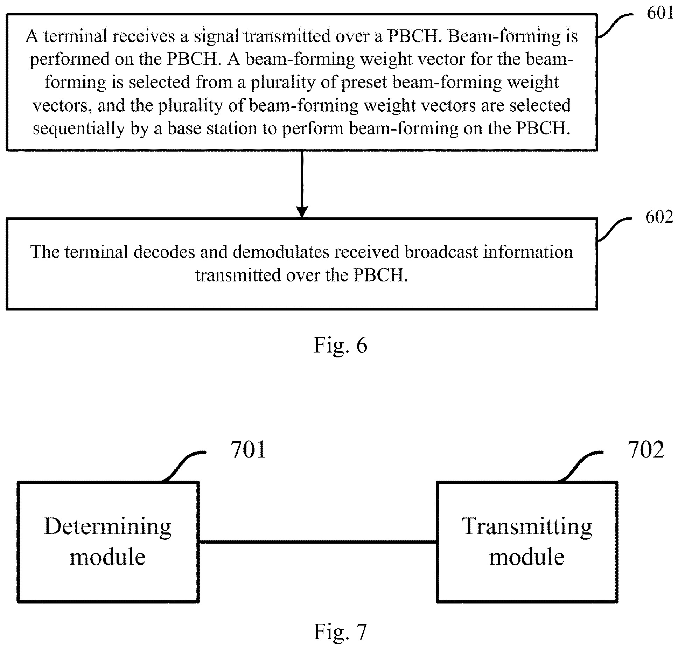

Referring to Fig. 6, which is a schematic flow chart of a method for transmitting broadcast information at the terminal's side according to an embodiment of the disclosure, and as illustrated, the flow can include the followings operations.

Operation 601: A terminal receives a signal transmitted over a PBCH. Beam-forming is performed on the PBCH. A beam-forming weight vector for the beam-forming is selected from a plurality of preset beam-forming weight vectors, and the plurality of beam-forming weight vectors are selected sequentially by a base station to perform beam-forming on the PBCH. In an implementation, the entire sector is fully covered with beams corresponding to the plurality of beam-forming weight vectors.

Reference can be made to the flow of transmitting broadcast information at the base station side for details of beam-forming on the PBCH, so a repeated description thereof is omitted here.

Operation 602: The terminal decodes and demodulates received broadcast information transmitted over the PBCH.

In one embodiment, the terminal can demodulate and decode the broadcast information transmitted over the PBCH and received over one of the beams separately, that is, the terminal demodulates and decodes the broadcast information transmitted over any one of the beams independently. Taking a transmission cycle of broadcast information being 10ms as an example, the terminal receives the signal transmitted over the PBCH over one of the beams every 10ms, then demodulates and decodes the received signal.

In another embodiment, the terminal can merge signals transmitted over the PBCH and received over K (K is an integer more than 1) beams, and then perform demodulation and decoding. That is, the terminal can merge signals received consecutively over the PBCH for K times, and then perform demodulation and decoding. For example, a PBCH cycle is 40ms, and a PBCH is transmitted once every 10ms (that is, a transmission cycle of broadcast information is 10ms), the value of K can be 4, the terminal receives and buffers a signal transmitted over the PBCH, over one of the beams every 10ms, and after four transmission cycles of broadcast information, the terminal merges the signals received over the PBCH in 40ms (i.e., broadcast information received for four times), and then perform demodulation and decoding.

In a case where demodulation reference signal of broadcast information is also transmitted in OFDM symbols occupied by the PBCH, in an embodiment of the disclosure, as described above, the base station can perform beam-forming on a demodulation reference signal of broadcast information transmitted over the same scheduling resource as the PBCH using the same beam-forming weight vector as the PBCH. Correspondingly the terminal can receive the demodulation reference signal of broadcast information transmitted by the base station as described above, and demodulate and decode the signal transmitted over the physical broadcast channel using the received demodulation reference signal of broadcast information.

In an implementation, the terminal searches for a cell, receives a synchronization signal, and remains synchronized with the system. The terminal determines the identifier (ID) of the current cell according to the synchronization signal, and determines a resource for the demodulation reference signal of broadcast information according to a preset correspondence relationship between a cell ID and a demodulation reference signal of broadcast information, where the resource for the demodulation reference signal of broadcast information can include a time resource, a frequency resource, a sequence, and a combination thereof. In this way, the terminal can receive the demodulation reference signal of broadcast information over the corresponding resource.

As can be apparent, in the embodiments above of the disclosure, the base station performs beam-forming on the PBCH using multiple preset beam-forming weight vectors, and the preset beam-forming weight vectors are selected sequentially by the base station to perform beam-forming on the PBCH; and since the number of preset beam-forming weight vectors is more than one, the effect of covering the sector can be improved over a single beam, and also since these preset beam-forming weight vectors are selected sequentially by the base station to perform beam-forming on the PBCH, the sector can be covered in effect with the broadcast information transmitted over the PBCH.

Based upon the same technical idea, an embodiment of the disclosure further provides a base station.

Referring to Fig. 7, which is a schematic structural diagram of a base station according to an embodiment of the disclosure, reference can be made to the flow above of transmitting broadcast information at the base station side for details of the base station. As illustrated, the base station can include a determining module 701 and a transmitting module 702.

The determining module 701 is configured to determine a beam-forming weight vector for beam-forming on a physical broadcast channel according to a plurality of preset beam-forming weight vectors, where broadcast information is transmitted over the physical broadcast channel; and the preset beam-forming weight vectors are selected sequentially by the base station to perform beam-forming on the physical broadcast channel.

The transmitting module 702 is configured to perform beam-forming on the physical broadcast channel using the determined beam-forming weight vector.

In an implementation, the entire sector is fully covered with beams corresponding to the plurality of preset beam-forming weight vectors.

In an implementation, the determining module 701 can be configured to select one of the plurality of preset beam-forming weight vectors according to a preset order at a preset cycle, where the selected beam-forming weight vector is used for performing beam-forming on the physical broadcast channel in the corresponding cycle.

In an implementation, the length of the cycle is an integer multiple of a transmission cycle of the broadcast information.

In an implementation, the plurality of preset beam-forming weight vectors are divided into M sets, each set includes N beam-forming weight vectors, the entire sector is fully covered with beams corresponding to the M*N beam-forming weight vectors, and both M and N are integers more than 1. Correspondingly, the determining module 701 can be configured to: select one of the M sets according to a preset first order at a preset first cycle; and select one of the beam-forming weight vectors in the selected set according to a preset second order at a preset second cycle, where the selected beam-forming weight vector is used to perform beam-forming on the physical broadcast channel in the corresponding cycle, and the length of the first cycle is no less than N times the length of the second cycle.

The length of the second cycle is T, the length of the first cycle is M*T, and T is an integer multiple of the length of the transmission cycle of broadcast information.

In an implementation, the transmitting module 702 can be further configured to perform beam-forming on a demodulation reference signal of broadcast information transmitted over the same scheduling resource as the physical broadcast channel using the determined beam-forming weight vector.

Based upon the same technical idea, an embodiment of the disclosure further provides a terminal.

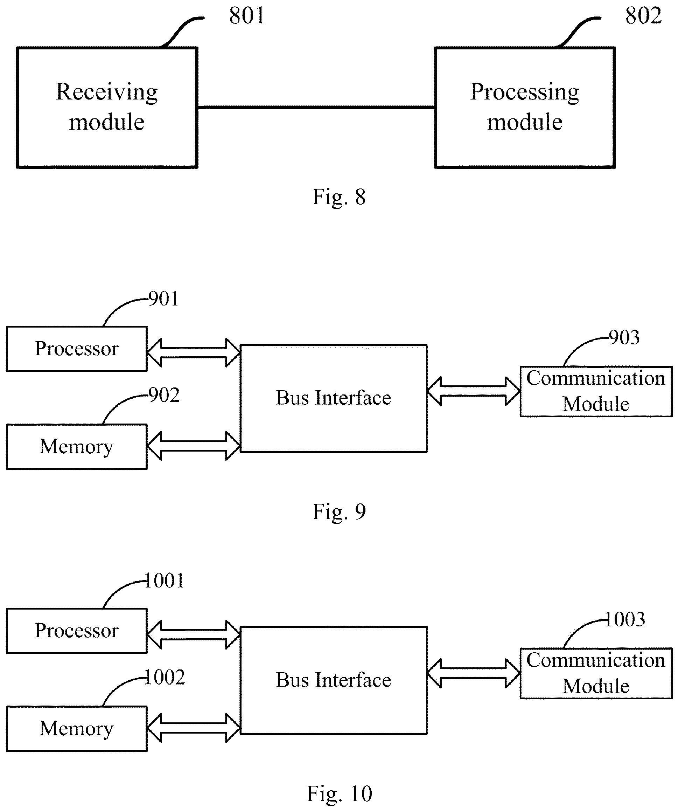

Referring to Fig. 8, which is a schematic structural diagram of a terminal according to an embodiment of the disclosure, reference can be made to the flow above of transmitting broadcast information at the terminal's side for details of the terminal. As illustrated, the terminal can include a receiving module 801 and a processing module 802.

The receiving module 801 is configured to receive a signal transmitted over a physical broadcast channel, where the physical broadcast channel is transmitted after beam-forming is performed thereon using a beam-forming weight vector selected from a plurality of preset beam-forming weight vectors, and the plurality of beam-forming weight vectors are selected sequentially by a base station to perform beam-forming on the physical broadcast channel.

The processing module 802 is configured to decode and demodulate received broadcast information transmitted over the physical broadcast channel.

In an implementation, the entire sector is fully covered with beams corresponding to the plurality of preset beam-forming weight vectors.

In an implementation, the processing module 802 can be configured to: demodulate and decode the signal transmitted over the physical broadcast channel and received over one of the beams separately; or merge the signals transmitted over the physical broadcast channel and received over a number K of beams, and then performs demodulation and decoding, where K is an integer more than 1.

In an implementation, the receiving module 801 can be further configured to receive a demodulation reference signal of broadcast information, where the demodulation reference signal of broadcast information is transmitted after performing beam-forming thereon using the same beam-forming weight vector as the beam-forming weight vector for the physical broadcast channel over the same scheduling resource. Correspondingly the processing module 802 can be configured to demodulate and decode the signal transmitted over the physical broadcast channel according to the received demodulation reference signal of broadcast information.

Based upon the same technical idea, another embodiment of the disclosure further provides a base station, and reference can be made to the flow above of transmitting broadcast information at the base station side for details of the base station.

Referring to Fig. 9 which is a schematic structural diagram of a base station according to an embodiment of the disclosure, the base station can include a processor 901, a memory 902, a communication module 903, and a bus interface.

The processor 901 is responsible for managing bus architecture and performing normal processes, and the memory 902 can store data for use by the processor 901 in performing operations. The communication module 903 is configured to be controlled by the processor 901 to receive and transmit data.

The bus architecture can include any number of interconnecting buses and bridges to particularly link together various circuits including one or more processors represented by the processor 901, and one or more memories represented by the memory 902. The bus architecture can further link together various other circuits, e.g., prophetical devices, manostats, power management circuits, etc., all of which are well known in the art, so a further description thereof will be omitted in this context. The bus interface serves as an interface. The processor 901 is responsible for managing the bus architecture and performing normal processes, and the memory 902 can store data for use by the processor 901 in performing operations.

The flow of processing a signal according to the embodiment of the disclosure can be applied to the processor 901, or performed by the processor 901. In an implementation, the respective operations in the flow of processing a signal can be performed by integrated logic circuits in hardware, or instructions in software, in the processor 901. The processor 901 can be a general-purpose processor, a digital signal processor, an application specific integrated circuit, a field programmable gate array or another programmable logic device, a discrete gate, a transistor logic device, or discrete hardware component. The respective methods, operations, and logic block diagrams disclosed in the embodiments of the disclosure can be implemented or performed. The general-purpose processor can be a micro processor, or can be any conventional processor, etc. The operations in the method according to the embodiment of the disclosure can be performed directly by a hardware processor, or performed by a combination of hardware and software modules in the processor. The software module can be located in a random memory, a flash memory, a read-only memory, a programmable read-only memory, an electrically erasable and programmable memory, a register, or another storage medium known in the art. The storage medium is located in the memory 902, and the processor 901 reads the information in the memory 902, and performs the operations in the flow of processing a signal, in combination with the hardware thereof.

The processor 901 can be configured to read and execute the program in the memory 902 to: determine a beam-forming weight vector for beam-forming on a physical broadcast channel according to a plurality of preset beam-forming weight vectors, where broadcast information is transmitted over the physical broadcast channel; and the preset beam-forming weight vectors are selected sequentially by the base station to perform beam-forming on the physical broadcast channel; and perform beam-forming on the physical broadcast channel using the determined beam-forming weight vector.

In an implementation, the entire sector is fully covered with beams corresponding to the plurality of preset beam-forming weight vectors.

In an implementation, the processor 901 can be configured to select one of the plurality of preset beam-forming weight vectors according to a preset order at a preset cycle, where the selected beam-forming weight vector is used for performing beam-forming on the physical broadcast channel in the corresponding cycle.

In an implementation, the length of the cycle is an integer multiple of a transmission cycle of the broadcast information.

In an implementation, the plurality of preset beam-forming weight vectors are divided into M sets, each set includes N beam-forming weight vectors, the entire sector is fully covered with beams corresponding to the M*N beam-forming weight vectors, and both M and N are integers more than 1. Correspondingly the processor 901 can be configured: to select one of the M sets according to a preset first order at a preset first cycle; and to select one of the beam-forming weight vectors in the selected set according to a preset second order at a preset second cycle, where the selected beam-forming weight vector is used to perform beam-forming on the physical broadcast channel in the corresponding cycle, and the length of the first cycle is no less than N times the length of the second cycle.

The length of the second cycle is T, the length of the first cycle is M*T, and T is an integer multiple of the length of the transmission cycle of broadcast information.

In an implementation, the processor 901 can be further configured to perform beam-forming on a demodulation reference signal of broadcast information transmitted over the same scheduling resource as the physical broadcast channel using the determined beam-forming weight vector.

Based upon the same technical idea, an embodiment of the disclosure further provides a terminal, and reference can be made to the flow above of transmitting broadcast information at the terminal side for details of the terminal.

Referring to Fig. 10 which is a schematic structural diagram of a terminal according to an embodiment of the disclosure, and the terminal can include a processor 1001, a memory 1002, a communication module 1003, and a bus interface.

The processor 1001 is responsible for managing bus architecture and performing normal processes, and the memory 1002 can store data for use by the processor 1001 in performing operations. The communication module 1003 is configured to be controlled by the processor 1001 to receive and transmit data.

The bus architecture can include any number of interconnecting buses and bridges to particularly link together various circuits including one or more processors represented by the processor 1001, and one or more memories represented by the memory 1002. The bus architecture can further link together various other circuits, e.g., prophetical devices, manostats, power management circuits, etc., all of which are well known in the art, so a further description thereof will be omitted in this context. The bus interface serves as an interface. The processor 1001 is responsible for managing the bus architecture and performing normal processes, and the memory 1002 can store data for use by the processor 1001 in performing operations.

The flow of processing a signal according to the embodiment of the disclosure can be applied to the processor 1001, or performed by the processor 1001. In an implementation, the respective operations in the flow of processing a signal can be performed by integrated logic circuits in hardware, or instructions in software, in the processor 1001. The processor 1001 can be a general-purpose processor, a digital signal processor, an application specific integrated circuit, a field programmable gate array or another programmable logic device, a discrete gate, a transistor logic device, or a discrete hardware component. The respective methods, operations, and logic block diagrams disclosed in the embodiments of the disclosure can be implemented or performed. The general-purpose processor can be a micro processor, or can be any conventional processor, etc. The operations in the method according to the embodiment of the disclosure can be performed directly by a hardware processor, or performed by a combination of hardware and software modules in the processor. The software module can be located in a random memory, a flash memory, a read-only memory, a programmable read-only memory, an electrically erasable and programmable memory, a register, or another storage medium known in the art. The storage medium is located in the memory 1002, and the processor 1001 reads the information in the memory 1002, and performs the operations in the flow of processing a signal, in combination with the hardware thereof.

In an implementation, the processor 1001 can be configured to read and execute the program in the memory 1002 to: receive a signal transmitted over a physical broadcast channel through the communication module 1003, where the physical broadcast channel is transmitted after beam-forming is performed thereon using a beam-forming weight vector selected from a plurality of preset beam-forming weight vectors, and the plurality of beam-forming weight vectors are selected sequentially by a base station to perform beam-forming on the physical broadcast channel; and decode and demodulate received broadcast information transmitted over the physical broadcast channel.

In an implementation, the entire sector is fully covered with beams corresponding to the plurality of preset beam-forming weight vectors.

In an implementation, the processor 1001 can be configured to: demodulate and decode the signal transmitted over the physical broadcast channel and received over one of the beams separately; or merge the signals transmitted over the physical broadcast channel and received over K beams and performs demodulation and decoding, where K is an integer more than 1.

In an implementation, the processor 1001 can be further configured to receive a demodulation reference signal of broadcast information through the communication module 1003, where the demodulation reference signal of broadcast information is transmitted after performing beam-forming thereon using the same beam-forming weight vector as the beam-forming weight vector for the physical broadcast channel over the same scheduling resource. Correspondingly the processor 1001 can be configured to demodulate and decode the signal transmitted over the physical broadcast channel according to the received demodulation reference signal of broadcast information.

Those skilled in the art shall appreciate that the embodiments of the disclosure can be embodied as a method, a system or a computer program product. Therefore the disclosure can be embodied in the form of an all-hardware embodiment, an all-software embodiment or an embodiment of software and hardware in combination. Furthermore the disclosure can be embodied in the form of a computer program product embodied in one or more computer useable storage mediums (including but not limited to a disk memory, a CD-ROM, an optical memory, etc.) in which computer useable program codes are contained.

The disclosure has been described in a flow chart and/or a block diagram of the method, the device (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the disclosure have been described, those skilled in the art benefiting from the underlying inventive concept can make additional modifications and variations to these embodiments. Therefore the appended claims are intended to be construed as encompassing the preferred embodiments and all the modifications and variations coming into the scope of the disclosure.

Evidently those skilled in the art can make various modifications and variations to the disclosure without departing from the spirit and scope of the disclosure. Thus the disclosure is also intended to encompass these modifications and variations thereto so long as the modifications and variations come into the scope of the claims appended to the disclosure and their equivalents.

## Claims

1. A method for transmitting broadcast information, comprising:
determining, by a base station, a beam-forming weight vector for beam-forming on a physical broadcast channel according to a plurality of preset beam-forming weight vectors, wherein broadcast information is transmitted over the physical broadcast channel, and the preset beam-forming weight vectors are selected sequentially by the base station to perform beam-forming on the physical broadcast channel; and
performing, by the base station, beam-forming on the physical broadcast channel using the determined beam-forming weight vector.

2. The method according to claim 1, wherein the entire sector is fully covered with beams corresponding to the plurality of preset beam-forming weight vectors.

3. The method according to claim 1 or 2, wherein determining, by the base station, the beam-forming weight vector for beam-forming on the physical broadcast channel comprises:
selecting, by the base station, one of the plurality of preset beam-forming weight vectors according to a preset order at a preset cycle, wherein the selected beam-forming weight vector is used for performing beam-forming on the physical broadcast channel in the corresponding cycle.

4. The method according to claim 3, wherein the length of the cycle is an integer multiple of a transmission cycle of the broadcast information.

5. The method according to claim 1 or 2, wherein the plurality of preset beam-forming weight vectors are divided into M sets, each set comprises N beam-forming weight vectors, the entire sector is fully covered with beams corresponding to the M*N beam-forming weight vectors, and both M and N are integers more than 1; and
determining, by the base station, the beam-forming weight vector for beam-forming on the physical broadcast channel comprises:
selecting, by the base station, one of the M sets according to a preset first order at a preset first cycle; and
selecting, by the base station, one of the beam-forming weight vectors in the selected set according to a preset second order at a preset second cycle, wherein the selected beam-forming weight vector is used to perform beam-forming on the physical broadcast channel in the corresponding cycle, and the length of the first cycle is no less than N times the length of the second cycle.

6. The method according to claim 5, wherein the length of the second cycle is T, the length of the first cycle is M*T, and T is an integer multiple of the length of the transmission cycle of broadcast information.

7. The method according to claim 1, further comprising:
performing, by the base station, beam-forming on a demodulation reference signal of broadcast information transmitted over a same scheduling resource as the physical broadcast channel using the determined beam-forming weight vector.

8. A method for transmitting broadcast information, comprising:
receiving, by a terminal, a signal transmitted over a physical broadcast channel, wherein beam-forming is performed on the physical broadcast channel using a beam-forming weight vector selected from a plurality of preset beam-forming weight vectors, and the plurality of beam-forming weight vectors are selected sequentially by a base station to perform beam-forming on the physical broadcast channel; and
decoding and demodulating, by the terminal, received broadcast information transmitted over the physical broadcast channel.

9. The method according to claim 8, wherein the entire sector is fully covered with beams corresponding to the plurality of preset beam-forming weight vectors.

10. The method according to claim 8 or 9, wherein decoding and demodulating, by the terminal, the received broadcast information transmitted over the physical broadcast channel comprises:
demodulating and decoding, by the terminal, the broadcast information transmitted over the physical broadcast channel and received over one of beams separately; or
merging by the terminal, broadcast information transmitted over the physical broadcast channel and received over K beams and performing demodulation and decoding on the merged broadcast information, wherein K is an integer more than 1.

11. The method according to any one of the claims 8 to 10, further comprising:
receiving a demodulation reference signal of broadcast information, wherein the demodulation reference signal of broadcast information is transmitted over a same scheduling resource as the physical broadcast channel after performing beam-forming thereon using the same beam-forming weight vector for the physical broadcast channel; and
decoding and demodulating, by the terminal, the received broadcast information transmitted over the physical broadcast channel comprises:
decoding and demodulating, by the terminal, the received broadcast information transmitted over the physical broadcast channel according to the received demodulation reference signal of broadcast information.

12. Abase station, comprising:
a determining module configured to determine a beam-forming weight vector for beam-forming on a physical broadcast channel according to a plurality of preset beam-forming weight vectors, wherein broadcast information is transmitted over the physical broadcast channel, and the preset beam-forming weight vectors are selected sequentially by the base station to perform beam-forming on the physical broadcast channel; and
a transmitting module configured to perform beam-forming on the physical broadcast channel using the determined beam-forming weight vector.

13. The base station according to claim 12, wherein the entire sector is fully covered with beams corresponding to the plurality of preset beam-forming weight vectors.

14. The base station according to claim 12 or 13, wherein the determining module is further configured to:
select one of the plurality of preset beam-forming weight vectors according to a preset order at a preset cycle, wherein the selected beam-forming weight vector is used for performing beam-forming on the physical broadcast channel in the corresponding cycle.

15. The base station according to claim 14, wherein the length of the cycle is an integer multiple of a transmission cycle of the broadcast information.

16. The base station according to claim 12 or 13, wherein the plurality of preset beam-forming weight vectors are divided into M sets, each set comprises N beam-forming weight vectors, the entire sector is fully covered with beams corresponding to the M*N beam-forming weight vectors, and both M and N are integers more than 1; and
the determining module is further configured to:
select one of the M sets according to a preset first order at a preset first cycle; and select one of the beam-forming weight vectors in the selected set according to a preset second order at a preset second cycle, wherein the selected beam-forming weight vector is used to perform beam-forming on the physical broadcast channel in the corresponding cycle, and the length of the first cycle is no less than N times the length of the second cycle.

17. The base station according to claim 16, wherein the length of the second cycle is T, the length of the first cycle is M*T, and T is an integer multiple of the length of the transmission cycle of broadcast information.

18. The base station according to claim 12, wherein the transmitting module is further configured to:
perform beam-forming on a demodulation reference signal of broadcast information transmitted over a same scheduling resource as the physical broadcast channel using the determined beam-forming weight vector.

19. A terminal, comprising:
a receiving module configured to receive a signal transmitted over a physical broadcast channel, wherein beam-forming is performed on the physical broadcast channel using a beam-forming weight vector selected from a plurality of preset beam-forming weight vectors, and the plurality of beam-forming weight vectors are selected sequentially by a base station to perform beam-forming on the physical broadcast channel; and
a processing module configured to decode and demodulate received broadcast information transmitted over the physical broadcast channel.

20. The terminal according to claim 19, wherein the entire sector is fully covered with beams corresponding to the plurality of preset beam-forming weight vectors.

21. The terminal according to claim 19 or 20, wherein the processing module is further configured to:
demodulate and decode the broadcast information transmitted over the physical broadcast channel and received over one of beams separately; or
merge broadcast information transmitted over the physical broadcast channel and received over K beams and perform demodulation and decoding on the merged broadcast information, wherein K is an integer more than 1.

22. The terminal according to any one of claims 19 to 21, wherein the receiving module is further configured to receive a demodulation reference signal of broadcast information, wherein the demodulation reference signal of broadcast information is transmitted over a same scheduling resource as the physical broadcast channel after performing beam-forming thereon using the same beam-forming weight vector for the physical broadcast channel; and
the processing module is configured to decode and demodulate the received broadcast information transmitted over the physical broadcast channel according to the received demodulation reference signal of broadcast information.

23. Abase station, comprising:
a communication module;
a memory configured to store computer program instructions; and
a processor coupled to the memory, and configured to read the computer program instructions stored in the memory to perform:
determining, by a base station, a beam-forming weight vector for beam-forming on a physical broadcast channel according to a plurality of preset beam-forming weight vectors, wherein broadcast information is transmitted over the physical broadcast channel, and the preset beam-forming weight vectors are selected sequentially by the base station to perform beam-forming on the physical broadcast channel; and
performing, by the base station, beam-forming on the physical broadcast channel using the determined beam-forming weight vector.

24. A terminal, comprising:
a communication module;
a memory configured to store computer program instructions; and
a processor coupled to the memory, and configured to read the computer program instructions stored in the memory to perform:
receiving, by a terminal, a signal transmitted over a physical broadcast channel, wherein beam-forming is performed on the physical broadcast channel using a beam-forming weight vector selected from a plurality of preset beam-forming weight vectors, and the plurality of beam-forming weight vectors are selected sequentially by a base station to perform beam-forming on the physical broadcast channel; and
decoding and demodulating, by the terminal, received broadcast information transmitted over the physical broadcast channel.
